# FASCICULE DE BREVET EUROPEEN

(11) **EP 0 821 988 B1**
(45) Date de publication et mention de la délivrance du brevet: **22.10.2003**
(21) Numéro de dépôt: 97401813.7
(22) Date de dépôt: 28.07.1997
(51) Int. Cl.: B01D 15/02

(54) **Dispositif et procédé de rinçage en lit mobile simulé comportant au moins deux lignes de distribution de fluides**
Vorrichtung und Verfahren zum Spülen eines simulierten Wanderbettes, das mindestens zwei Leitungen zur Verteilung der Fluide enthält
Device and process for rinsing a simulated moving bed comprising at least two fluid distribution lines

(30) Priorité: 31.07.1996 FR 9609773
(43) Date de publication de la demande: 04.02.1998
(73) Titulaire: Institut Français du Pétrole, 92852 Rueil-Malmaison Cedex (FR)
(72) Inventeur: Hotier, Gérard, 92500 Rueil Malmaison (FR); Jacob, Robert, 69630 Chaponost (FR); Chopinet, France, 78160 Marly Le Roi (FR); Nativel, Françis, 78150 Le Chesnay (FR)

(56) Documents cités:
- EP-A- 0 075 611
- EP-A- 0 415 822
- EP-A- 0 688 590
- US-A- 5 156 736

## Description

L'invention concerne un dispositif et un procédé de rinçage dans un dispositif de séparation en lit mobile simulé comprenant au moins deux lignes de circulation reliant les plateaux de distribution aux fluides extérieurs.

L'art antérieur est particulièrement illustré par les brevets EP-A-688 590, EP-A-415 822, EP-A-075 611 et US 5.156 736.

Dans les procédés de séparation par adsorption en lit mobile simulé tels que mis en oeuvre dans la gamme de procédés «Sorbex» parmi lesquels les procédés PAREX®, MOLEX®, SAREX®, OLEX®, EBEX®, on dispose d'une pluralité de lits localisés dans une ou deux colonnes d'adsorption. Chaque plateau distributeur situé entre deux lits consécutifs est relié à l'extérieur au moyen d'une seule ligne aboutissant à une vanne rotative mettant en communication successivement chacun des lits avec séquentiellement chacun des flux entrant dans ou sortant de la section d'adsorption. Ces flux comprennent :
1) la charge à séparer constituée d'un mélange d'au moins deux produits A le plus adsorbé dans les lits et B le moins adsorbé ou retardé dans les lits,
2) le solvant ou désorbant servant à éluer ou désorber les constituants de la charge,
3) l'extrait constitué d'un mélange du produit le plus adsorbé (A) et de désorbant,
4) le raffinat constitué d'un mélange du produit le moins adsorbé (B) et de désorbant,
5) le rinçage entrant « Flush in » constitué d'un mélange d'extrait et de désorbant, adapté à repousser à l'intérieur de l'adsorbeur le bouchon de charge qui se trouve emprisonné dans la ligne commune après que la charge ait été introduite dans l'adsorbeur,
6) le rinçage sortant « Flush out » constitué d'un mélange d'extrait et de désorbant, adapté à aspirer vers l'extérieur de l'adsorbeur le bouchon d'extrait qui se trouve emprisonné dans la ligne commune après que l'extrait ait été soutiré de l'adsorbeur. Les débits de rinçage sortant et de rinçage entrant sont égaux, une pompe met en communication le courant de rinçage sortant avec le courant de rinçage entrant. Le débit de rinçage est calculé de manière à ce que le volume de la plus longue ligne reliant la vanne rotative au lit le plus éloigné, soit balayé 2 à 3 fois pendant une période de permutation.
7) le rinçage secondaire entrant « Secondary Rush » peut être constitué soit de désorbant, soit d'extrait appauvri en désorbant. Son but est de balayer l'extrémité de la ligne commune de manière à repousser vers l'intérieur de l'adsorbeur, toute impureté qui aurait pu s'y loger par diffusion ou échange, juste avant de prélever l'extrait.

L'inconvénient de cette manière de procéder est que l'on doit rincer chacune des lignes communes entre l'introduction de la charge et le prélèvement d'extrait et entre le prélèvement d'extrait et l'introduction de désorbant, si l'on désire obtenir une grande pureté du constituant A dans l'extrait. Ce débit de rinçage lié au plus grand volume de ligne balayé est loin d'être négligeable devant le débit de charge, et il a pour effet de faire travailler le système un peu en retrait de l'optimum de débit dans les différentes zones.

Un autre inconvénient du couplage au moyen de la vanne tournante du rinçage entrant et du rinçage sortant est que cela nécessite impérativement une pompe, un débitmètre et une vanne de régulation de débit puisqu'au cours du cycle, le niveau de pression du rinçage sortant peut très bien être inférieur au niveau de pression du rinçage entrant.

En outre, ce système de régulation de débit sur la boucle de rinçage entrant, rinçage sortant, est mal adapté à un débit programmable variant, par exemple, de zero pendant une certaine partie de la période à une certaine valeur de consigne pendant une autre partie de la période, permettant ainsi un balayage efficace avec un minimum de volume déplacé.

Une technique alternative mise en oeuvre par exemple dans le procédé Éluxyl, consiste à relier chaque plateau distributeur situé entre deux lits consécutifs à l'extérieur par au moins deux lignes distinctes de circulation ou de distribution.

On trouve en outre une vanne tout ou rien distincte par plateau distributeur et par flux principal entrant ou sortant (désorbant, extrait, charge, raffinat).

En principe si l'on utilise l'une des deux lignes pour les fluides « propres » (désorbant ou extrait) et l'autre pour les fluides « sales » (charge ou raffinat), le. rinçage de chacune des deux lignes communes devient superflu. Si l'on utilise non plus deux lignes dédiées aux fluides « propres » et « sales » mais quatre lignes distinctes reliant chacun des flux principaux au plateau distributeur, le rinçage de ces lignes est en principe inutile.

Cependant chacune de ces lignes débouche sur le courant du flux principal circulant d'un lit au suivant et l'extrémité des deux lignes (dédiées aux fluides propres et aux fluides sales) ou l'extrémité des quatre lignes dédiées à l'extrait, au raffinat, à la charge ou au désorbant peut se trouver contaminée par échange ou diffusion avec le fluide principal. Lorsque l'on cherche à maximiser la pureté et le rendement, ces contaminations deviennent gênantes.

L'objet de l'invention est donc de remédier à cet inconvénient tout en effectuant des rinçages dont les volumes ou les débits sont aussi faibles que possible et en tout cas inférieurs à ceux des procédés liés à l'utilisation de la vanne tournante et d'une seule ligne commune aux quatre flux principaux par lit.

Un second objet de l'invention est de minimiser les volumes de rinçage en augmentant leur efficacité, en effectuant des rinçages à très fort débit pendant une partie de la période seulement.

Plus précisément, l'invention concerne un dispositif de séparation en lit mobile simulé à contre-courant ou à co-courant auquel est combiné un dispositif de rinçage de lignes véhiculant des fluides divers. De manière plus détaillée, on décrit un dispositif de séparation en lit mobile simulé comprenant une pluralité de colonnes chromatographiques ou sections de colonne interconnectées (2, 4, 6), un plateau de distribution (3) de fluides entre chaque section de colonne, au moins deux (10, 30) et au plus quatre lignes distinctes (10, 20, 30, 40) de circulation reliées au plateau de distribution (3), chaque ligne de circulation étant connectée à une ligne différente parmi les deux lignes d'alimentation (100, 300) par lesquelles entrent la charge et le désorbant et parmi les deux lignes de soutirage (200, 400) par lesquelles sortent un fluide avec le produit recherché et un fluide avec le ou les produits non recherchés ; ou bien une première ligne de circulation (10) étant connectée à deux lignes (100, 200) dans lesquelles circulent respectivement le desorbant et le fluide avec le produit recherché, une deuxième ligne de circulation (30) étant connectée à une ligne d'alimentation en charge (300) et une troisième ligne de circulation étant connectée à une ligne de soutirage du fluide avec le produit non recherché (400); ou bien une première ligne de circulation étant connectée à deux lignes (300 et 400) dans lesquelles circulent respectivement la charge et le fluide avec le ou les produits non recherchés, une deuxième ligne de circulation étant connectée à une ligne d'alimentation en désorbant (100), et une troisième ligne étant connectée à une ligne de soutirage d'un fluide avec le produit recherché (200) ; ou bien une ligne de circulation (10) étant connectée à deux lignes dans lesquelles circulent respectivement le désorbant (100) et le fluide avec le produit recherché (200) et l'autre ligne de circulation (30) étant connectée à deux lignes dans lesquelles circulent respectivement la charge (300) et le fluide avec le ou les produits non recherchés (400). Le dispositif est caractérisé en ce que la ligne (10) de circulation de fluide contenant le produit recherché comprend une ligne de rinçage (250) d'un fluide secondaire entrant (désorbant, fluide avec le produit recherché ou fluide avec le produit recherché appauvri en désorbant) ou d'un fluide sortant (mélange de désorbant et de fluide avec le produit recherché).

Selon une caractéristique du dispositif, celui-ci peut contenir au moins une autre des lignes de circulation (30) qui renferme une ligne de rinçage (350) d'un fluide entrant (désorbant) dans le plateau distributeur ou d'un fluide sortant (350) du plateau distributeur (charge, fluide contenant le ou les produits non recherchés).

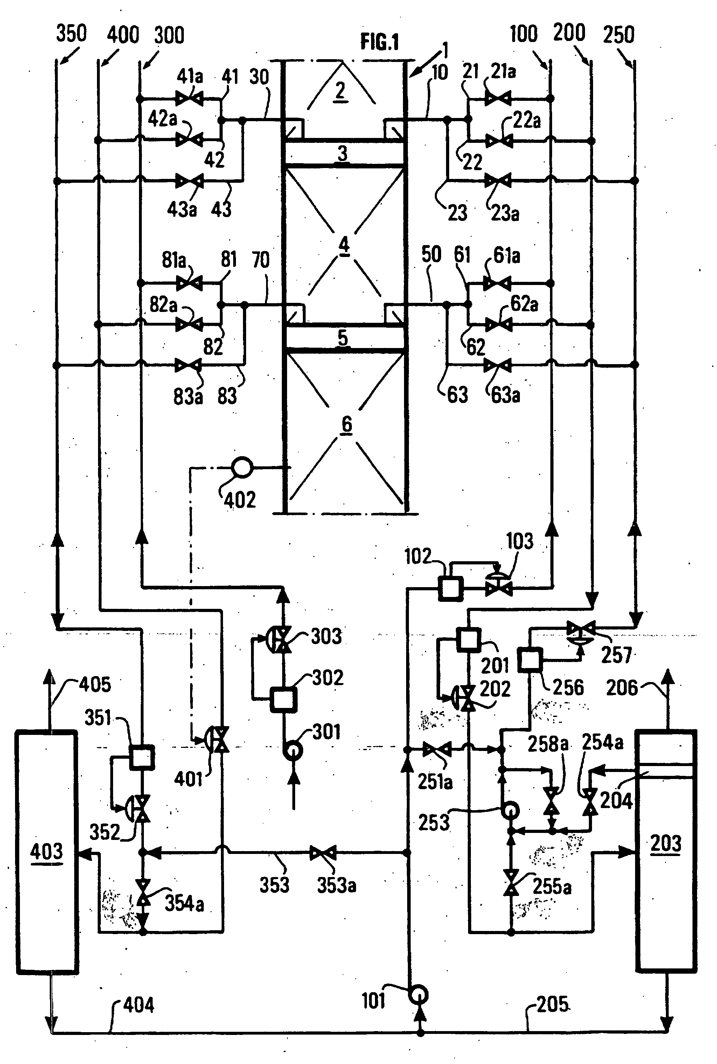

Selon une première variante, la ligne de rinçage du fluide entrant (250 ou 350) peut comprendre au moins une enceinte pressurisée ou une pompe d'alimentation (101 ou 253) en ledit fluide connectée respectivement à un organe de régulation de débit (351, 352 ou 256, 257 fig. 1).

Selon une deuxième variante, la ligne de rinçage (350 ou 250) du fluide sortant peut comprendre un organe de régulation de débit (352, 351 ou 256, 257).

L'invention concerne aussi un procédé mettant en oeuvre le dispositif. De manière plus détaillée, on décrit un procédé de séparation en lit mobile simulé dans une zone de séparation ou adsorbeur comprenant une pluralité de colonnes ou sections de colonnes interconnectées, un plateau de distribution de fluides entre chaque section de colonne, au moins deux (10, 30) et au plus quatre lignes (10, 20, 30, 40) distinctes de circulation reliées au plateau de distribution, chaque ligne étant connectée à une ligne différente parmi les quatre lignes contenant les quatre flux principaux (fluide comprenant le produit recherché, fluide comprenant le produit non recherché, charge, désorbant) ou bien une première ligne de circulation (10) étant connectée à deux lignes (100, 200) dans lesquelles circulent respectivement le desorbant et le fluide avec le produit recherché, une deuxième ligne de circulation (30) étant connectée à une ligne d'alimentation en charge (300) et une troisième ligne de circulation étant connectée à une ligne de soutirage du fluide avec le produit non recherché (400) ; ou bien une première ligne de circulation étant connectée à deux lignes (300 et 400) dans lesquelles circulent respectivement la charge et le fluide avec le ou les produits non recherchés, une deuxième ligne de circulation étant connectée à une ligne d'alimentation en désorbant (100), et une troisième ligne étant connectée à une ligne de soutirage d'un fluide avec le produit recherché (200) ou bien une ligne de circulation (10) étant connectée à deux lignes dans lesquelles circulent respectivement le désorbant (100) et le fluide avec le produit recherché (200) et l'autre ligne de circulation (30) étant connectée à deux lignés dans lesquelles circulent respectivement la charge (300) et le fluide avec le ou les produits non recherchés (400). Le procédé est caractérisé en ce qu'on effectue au moins un rinçage de la ligne (10) contenant le fluide comprenant le produit recherché par un fluide secondaire entrant dans chaque plateau de distribution ou par un fluide sortant de chacun desdits plateaux pendant au moins une partie d'une période de temps entre deux permutations successives de lignes d'alimentation en flux principaux et de lignes de soutirage de flux principaux, ou pendant la totalité desdites périodes, le fluide secondaire étant choisi dans le groupe formé par le désorbant, le fluide comprenant le produit recherché et le fluide comprenant le produit recherché débarrassé d'une partie au moins du désorbant.

Selon une caractéristique du procédé relative aux lignes pour les fluides « propres », on peut effectuer séquentiellement sur un plateau à la fois le rinçage de la ligne (10) contenant le fluide comprenant le produit recherché par le fluide secondaire sensiblement de même composition pendant au moins une partie de la période, tous les plateaux étant successivement balayés au cours d'un cycle.

On peut effectuer séquentiellement le rinçage de ladite ligne par le fluide secondaire, en aval du soutirage d'extrait et en amont de l'alimentation en charge si le produit recherché est dans l'extrait et en aval du raffinat et en amont du désorbant si le produit recherché est dans le raffinat.

On peut effectuer un rinçage de ladite ligne (10) contenant le fluide comprenant le produit recherché par le fluide contenant le produit recherché ou le désorbant ou ledit fluide appauvri en désorbant, en amont de l'alimentation en charge pendant une partie de la période puis en aval du soutirage d'extrait pendant l'autre partie de la période, les deux positions ainsi définies étant distinctes, si le produit recherché est dans l'extrait.

Selon une variante, on peut effectuer en continu le rinçage de ladite ligne par le fluide secondaire sur tous les plateaux à la fois pendant toutes les périodes du cycle.

En outre, on peut aussi réaliser un rinçage des lignes contenant un fluide « sale » (charge ou raffinat par exemple).

C'est ainsi que, selon une première variante, l'on peut effectuer séquentiellement au moins un rinçage de la ligne (30) contenant le fluide comprenant le ou les produits non recherchés par du désorbant entrant dans le plateau de distribution entre le soutirage d'extrait et l'alimentation en charge pendant une partie au moins de la période et de préférence pendant toute la période, lorsque le produit recherché est dans l'extrait.

On peut aussi, selon une deuxième variante, effectuer séquentiellement au moins un rinçage de la ligne contenant le fluide comprenant le ou les produits non recherchés par le fluide contenu dans la zone de désorption en produit recherché sortant d'un plateau de distribution compris entre l'alimentation en désorbant et le soutirage d'extrait et de préférence au voisinage de l'alimentation en désorbant, pendant une partie au moins de la période.

Enfin, selon une troisième variante, on peut effectuer en continu le rinçage des lignes comprenant le ou les produits non recherchés de tous les plateaux de distribution par le fluide contenu dans l'adsorbeur.

Selon une autre caractéristique de l'invention, lorsque le plateau de distribution comprend trois ou quatre lignes de circulation, on peut effectuer en outre le rinçage de la ligne véhiculant le désorbant (100) par du désorbant (ligne 150).

Le rinçage de la ligne contenant le fluide comprenant le produit recherché peut être effectué avec un rapport de débit de fluide de rinçage, par rapport au débit de charge compris entre 0,005 et 0,4 avantageusement entre 0,02 et 0,15 et de préférence entre 0,04 et 0,08.

On peut utiliser ce même rapport pour le rinçage de la ligne contenant le fluide comprenant le produit non recherché.

L'invention sera mieux décrite au vu des figures illustrant de manière schématique des modes de mise en oeuvre de l'invention, parmi lesquelles :
- la figure 1 illustre le dispositif de rinçage dans le cas où chaque distributeur de fluides comprend deux lignes de circulation (10 et 30)
- la figure 2 montre un dispositif de rinçage dans le cas où chaque distributeur est connecté à quatre lignes de circulation de fluides (10, 20, 30, 40).

On décrit une unité de séparation en lit mobile simulé constituée d'au moins une colonne 1 séparée en plusieurs lits ou tronçons 2, 4, 6,... le nombre de lits étant compris entre 4 et 24. Chaque lit est rempli d'un adsorbant, par exemple une zéolithe X ou Y échangée par un cation du groupe 11a et un cation du groupe la, lorsqu'il s'agit de séparer le paraxylène de la coupe C₈ aromatique.

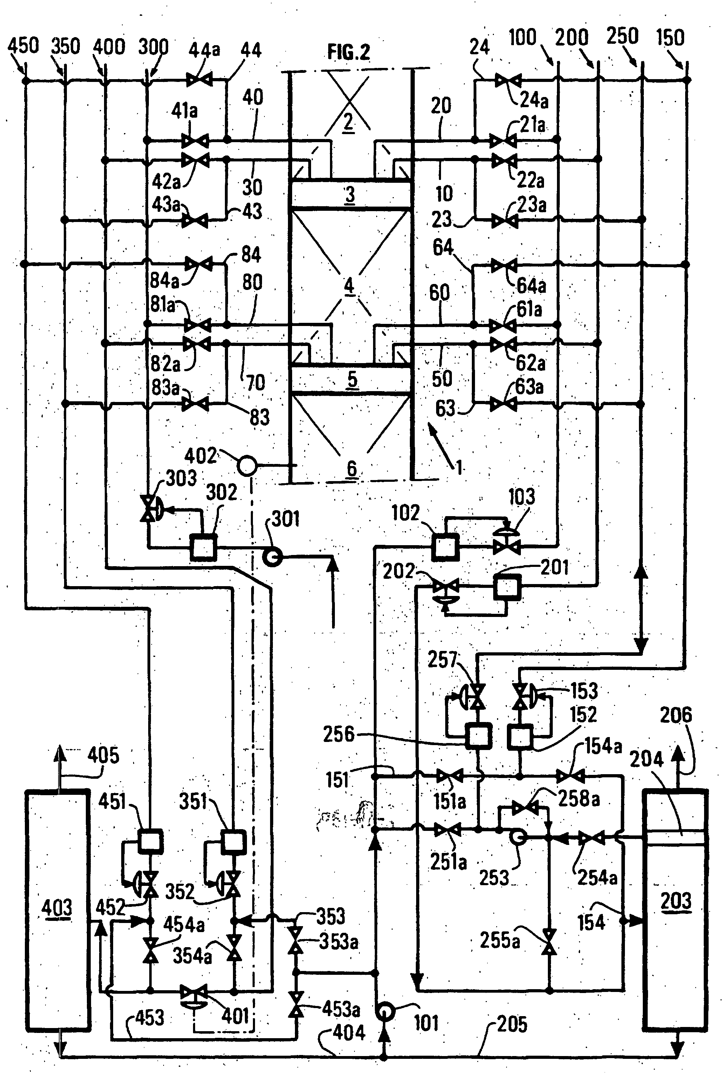

Mis à part le lit situé à l'extrémité inférieure de chaque colonne, chaque lit est séparé du lit immédiatement inférieur par un distributeur 3, 5... Ce distributeur est relié à l'extérieur de la colonne soit par 2 lignes '(10 et 30) de circulation par référence à la figure 1 soit par 3 lignes, soit par 4 lignes (10, 20, 30, 40) par référence à la figure 2.

Par référence aux figures 1 et 2, une ligne de désorbant 100 dessert chacun des lits par des vannes 21a, 61a. Le désorbant est envoyé successivement dans chaque lit par la ligne 100 au moyen d'une pompe 101 et son débit est régulé précisément grâce à un débitmètre 102 et une vanne de contrôle 103.

Une ligne d'extrait 200 dessert chacun des lits par des vannes 22a, 62a. L'extrait est soutiré, à débit contrôlé, successivement de chaque lit par la ligne 200 au moyen du débitmètre 201 et de la vanne 202 puis est dirigé vers une colonne à distiller 203 où par exemple le paraxylène est soutiré en tête par la ligne 206 tandis que le désorbant constitué essentiellement de paradiéthylbenzène est soutiré par la ligne 205 avant d'être renvoyé vers la pompe 101. Cette colonne comporte en outre un plateau soutireur 204 permettant de prélever de l'extrait appauvri en désorbant.

Une ligne de charge 300 dessert chacun des lits par les vannes 41a, 81a. La charge est envoyée successivement dans chaque lit par la ligne 300 au moyen d'une pompé 301 et son débit est régulé précisément grâce à un débitmètre 302 et une vanne de contrôle 303. Le raffinat est soutiré sous contrôle de pression successivement de chaque lit par la ligne 400 au moyen de la vanne de contrôle 401 et du capteur de pression 402 situé sur la colonne. Il est dirigé vers une colonne à distiller 403 où par exemple un mélange de paraffines et naphtènes, d'éthylbenzène, de métaxylène et d'orthoxylène est soutiré en tête par la ligne 405 tandis que le désorbant constitué essentiellement de paradiéthylbenzène est soutiré par la ligne 404 vers la pompe 101.

En référence à la figure 1 uniquement; les plateaux distributeurs communiquent vers l'extérieur par deux lignes 10 et 30 pour le plateau 3, et 50 et 70 pour le plateau 5 et ainsi de suite. Les lignes 10, 50 aboutissent respectivement aux lignes 21, 22 et 23 et aux lignes 61, 62, 63. Ces lignes servent à véhiculer les fluides propres par exemple l'extrait et le désorbant si le produit recherché se trouve dans l'extrait. Ces lignes 10, 50, peuvent être rincées soit de manière continue soit de manière séquentielle grâce respectivement aux lignes 23, 63 et aux vannes 23a, 63a. Lorsque l'on désire un rinçage continu, on utilisera des vannes aptes à réguler un débit constant et sensiblement égal quelle que soit la position d'introduction. Au contraire lorsque l'on veut un rinçage séquentiel on utilisera des vannes tout ou rien. Les vannes 23a, 63a permettent la mise en communication de chacun des distributeurs 3, 5 avec une ligne 250 permettant soit de prélever soit d'injecter un fluide de rinçage dans les lignes 10, 50. On peut injecter au moyen de la ligne 250 :
- soit du désorbant, on ouvre alors la vanne 251a et l'on régule le débit grâce au débitmètre 256 et la vanne de contrôle 257 (les vannes 254a, 255a et 258a sont fermées) ;
- soit de l'extrait. On ouvre alors la vanne 255a. La pompe 253, le débitmètre 256 et la vanne de contrôle 257 permettent d'envoyer un débit d'extrait régulé vers la ligne 250 (les vannes 251a, 254a et 258a sont fermées) ;
- soit de l'extrait appauvri en désorbant, on ouvre alors la vanne 254a, la pompe 253, le débitmètre 256 et la vanne de contrôle 257 permettent d'envoyer un débit d'extrait appauvri régulé vers la ligne 250 (les vannes 251a, 255a et 258a sont fermées).

On peut soutirer au moyen de la ligne 250 le contenu des lignes 10, 50. On ouvre alors les vannes 255a et 258a (les vannes 251 a, 254a sont fermées) le débitmètre 256 et la vanne de contrôle 257 permettent de soutirer un débit régulé du mélange extrait-désorbant et de l'envoyer vers la colonne à distiller 203.

Les lignes 30, 70 aboutissent respectivement aux lignes 41, 42, 43 et aux lignes 81, 82, 83. Ces lignes servent à véhiculer les fluides sales par exemple le raffinat et la charge si le produit désiré se trouve dans l'extrait. Ces lignes 30, 70 peuvent être rincées soit de manière continue soit de manière séquentielle grâce aux lignes 43, 83 et aux vannes 43a, 83a. Lorsque l'on désire un rinçage continu, on utilisera des vannes aptes à réguler un débit constant et égal quelle que soit la position d'introduction. Au contraire, si l'on veut un rinçage séquentiel, on utilisera des vannes tout ou rien. Les vannes 43a, 83a permettent la mise en communication de chacun des distributeurs 3, 5 avec une ligne 350 permettant soit de prélever soit d'injecter un fluide de rinçage dans les lignes 30, 70.

On peut injecter au moyen de la ligne 350 du désorbant, on ouvre alors la vanne 353a, on ferme la vanne 354a, et la vanne de contrôle 352 et le débitmètre 351 permettent de réguler le débit d'injection.

On peut soutirer au moyen de la ligne 350 du mélange charge raffinat que l'on renvoie (vanne 354a ouverte et vanne 353a fermée) à débit régulé par la vanne de contrôle 352 et le débitmètre 351 vers la colonne à distiller 403.

En référence à la figure 2 uniquement, les plateaux distributeurs communiquent vers l'extérieur par quatre lignes de circulation:
- 10, 20, 30, 40 pour le plateau 3,
- 50, 60, 70, 80 pour le plateau 5.

Raccordées aux lignes 20, 60, on trouve les lignes 24, 64. Les lignes 20, 60 servent exclusivement à véhiculer du désorbant depuis la ligne 100 ou du désorbant destiné au rinçage depuis la ligne 150 par l'intermédiaire des vannes 24a, 64a. Elles peuvent être rincées soit de manière continue soit de manière séquentielle grâce aux lignes 24, 64. Lorsque l'on désire un rinçage continu, on utilisera des vannes aptes à réguler un débit constant et sensiblement égal quelle que soit la position d'introduction. Au contraire lorsque l'on veut un rinçage séquentiel, on utilisera dès vannes tout ou rien.

Les vannes 24a, 64a permettent la mise en communication de chacun des distributeurs 3, 5 avec une ligne 150 permettant soit de prélever soit d'introduire un fluide de rinçage dans les lignes 20, 60.

On peut injecter au moyen de la ligne 150 du désorbant. On ouvre la vanne 151a et l'on régule le débit grâce au débitmètre 152 et à la vanne de contrôle 153 (la vanne 154a est fermée). On peut soutirer au moyen de la ligne 150 un mélange de désorbant et d'extrait ; on ouvre la vanne 154a (la vanné 151a est fermée) et l'on régule le débit grâce au débitmètre 152 et à la vanne de contrôle 153.

Raccordées aux lignes 10, 50 on trouve les lignes 23, 63. Les lignes 10, 50 servent exclusivement à véhiculer de l'extrait via les vannes 22a, 62a (vers la ligne 200) et un courant de rinçage depuis ou vers la ligne 250 via les vannes 23a, 63a.

Elles peuvent être rincées soit de manière continue soit de manière séquentielle. Lorsque l'on désire un rinçage continu, on utilisera des vannes aptes à réguler un débit constant et sensiblement égal quelle que soit la position d'introduction. Au contraire lorsque l'on veut un rinçage séquentiel, on utilisera des vannes tout ou rien.

Les vannes 23a, 63a permettent la mise en communication de chacun des distributeurs 3, 5 avec la ligne 250 permettant :
- soit d'injecter du désorbant ; on ouvre alors la vanne 251a et l'on régule le débit grâce au débitmètre 256 et à la vanne de contrôle 257 (les vannes 254a, 255a et 258a sont fermées) ;
   - soit d'injecter de l'extrait ; on ouvre alors la vanne 255a, la pompe 253, le débitmètre 256 et la vanne de contrôle 257 permettent d'envoyer un débit d'extrait régulé vers la ligne 250 (les vannes 251 a, 254a et 258a sont fermées) ;
   - soit d'injecter de l'extrait appauvri en désorbant ; on ouvre alors la vanne 254a. La pompe 253, le débitmètre 256 et la vanne de contrôle 257 permettent d'envoyer un débit d'extrait appauvri régulé, vers la ligne 250 (les vannes 251a, 255a et 258a sont fermées)
- soit de soutirer le contenu des lignes 10, 50. On ouvre alors les vannes 255a et 258a (les vannes 251a, 254a sont fermées). Le débitmètre 256 et la vanne de contrôle 257 permettent de soutirer un débit régulé du mélange extrait désorbant et de l'envoyer vers la colonne à distiller 203.

Raccordées aux lignes 40, 80, on trouve les lignes 44, 84. Les lignes 40, 80 servent exclusivement à véhiculer de la charge depuis la ligne 300 via les vannes 41a, 81a ou du désorbant destiné au rinçage de la ligne depuis la ligne 450 par l'intermédiaire des vannes 44a, 84a.

Elles peuvent être rincées de manière continue ou de manière séquentielle grâce aux lignes 44, 84. Pour un rinçage continu, on utilise des vannes aptes à réguler un débit constant et sensiblement égal quelle que soit la position d'introduction. Au contraire lorsque l'on veut un rinçage séquentiel, on utilisera des vannes tout ou rien.

Les vannes 44a, 84a permettent la mise en communication de chacun des distributeurs 3, 5 avec la ligne 450 rendant possible
- soit d'introduire du désorbant. On ouvre alors la vanne 453a, la vanne 454a est fermée et l'on régule le débit grâce au débitmètre 451 et à la vanne de contrôle 452
- soit de prélever le contenu des lignes 40, 80. On ouvre la vanne 454a, la vanne 453a est fermée et l'on régule le débit grâce au débitmètre 451 et à la vanne de contrôle 452.

Raccordées aux lignes 30, 70 on trouve les lignes 43, 83. Les lignes 30, 70 servent exclusivement à véhiculer le raffinat via les vannes 42a, 82a vers la ligne 400 et un courant de rinçage vers la ligne 350 via les vannes 43a, 83a.

Ces lignes peuvent être rincées soit de manière continue soit de manière séquentielle. Pour un rinçage continu on utilise des vannes propres à réguler un débit constant et sensiblement égal quelle que soit la position d'introduction. Au contraire lorsque l'on veut un rinçage séquentiel, on utilisera des vannes tout ou rien.

Les vannes 43a, 83a permettent la mise en communication de chacun des distributeurs 3, 5 avec la ligne 350 qui permet
- soit d'injecter du désorbant de rinçage. On ouvre alors la vanne 353a, la vanne 354a est fermée, la vanne de contrôle 352 et le débitmètre 351 régulent ce débit ;
- soit de soutirer du mélange provenant de l'adsorbeur par les lignes 30, 70, il est renvoyé (vanne 354a ouverte, vanne 353a fermée) vers la colonne à distiller de raffinat 403. Le débit est régulé par le débitmètre 351 et la vanne de contrôle 352.

Les exemples suivants illustrent l'invention
- Partie descriptive commune aux exemples 1 à 19

Une unité de séparation en lit mobile simulé est constituée de 24 lits d'adsorbants disposés en deux colonnes de douze lits chacun. Le diamètre intérieur de chaque lit est de 915 mm. Les hauteurs des lits n° 1 à 11 et 13 à 23 sont toutes sensiblement égales tandis que les hauteurs des lits 12 et 24 ont été réduites : conformément au brevet Français 2.721.529, les lits situés au voisinage des pompes de recyclage sont plus courts de manière à compenser les effets induits par le volume mort de chaque boucle de recyclage.

En moyenne, le volume de chaque lit est 0,686 m³ auxquels s'ajoutent en moyenne 0,031 m³ par lit représentant l'ensemble des volumes morts (boucles de recyclage et volumes internes des distributeurs). Entre chaque deux lits se trouve un distributeur séparant ces lits et relié à l'extérieur par deux lignes distinctes. La première de ces deux lignes aboutit à une vanne de charge, une vanne de raffinat et une vanne de rinçage de la ligne de service « sale ». Chaque vanne de rinçage tout ou rien est suivie d'une vanne manuelle pour régler les débits. La seconde de ces deux lignes aboutit à une vanne de désorbant, une vanne d'extrait et une vanne de rinçage de la ligne de service « propre ».

La ligne de circulation de charge est équipée d'une pompe, d'une vanne de.contrôle de débit et d'un débitmètre, elle est reliée à chacune des 24 lignes de service « sale » de chacun des étages. La ligne de circulation de raffinat est équipée d'une vanne de contrôle de pression et d'un débitmètre, elle est reliée à chacune des 24 lignes de service « sale » de chacun des étages.

La ligne de circulation de rinçage « sale » est équipée d'un débitmètre. Elle peut être connectée soit au refoulement de la pompe de désorbant soit à l'alimentation de la colonne à distiller de raffinat. Elle permet donc de faire soit des rinçages entrants soit des rinçages sortants.
La ligne de circulation de désorbant est équipée d'une pompe, d'une vanne de contrôle de débit et d'un débitmètre, elle est reliée à chacune des 24 lignes de service « propre » de chacun des étages.
La ligne de circulation d'extrait est équipée d'une vanne de contrôle de débit et d'un débitmètre, elle est reliée à chacune des 24 lignes de service « propre » de chacun des étages.

La ligne de circulation de rinçage « propre » est équipée d'une pompe, d'une vanne de contrôle de débit et d'un débitmètre. Elle peut être connectée soit à l'aspiration de la pompe de désorbant soit juste en aval de la vanne de contrôle d'extrait, soit enfin au 25e plateau de la colonne à distiller d'extrait (les quarante premiers sont en zone de rectification, les vingt derniers sont en zone d'épuisement). Cette ligne de distribution de rinçage propre permet donc de faire des rinçages entrants soit de désorbant soit d'extrait, soit d'extrait appauvri en désorbant.
L'adsorbant est une zéolithe X dont le principal cation de compensation est le baryum. Le désorbant est constitué à raison de 97,9 % par du paradiéthylbenzène, de 1,6 % par du métadiéthylbenzène et à raison de 0,5 % par une dizaine de différents constituants aromatiques à 1.0 atomes de carbone. La charge à séparer est constituée de 3,1 % de paraffines et naphtènes, de 1,2 % de toluène, de 11,6 % d'éthylbenzène, de 21,9 % de paraxylène, de 39,1 % de métaxylène, de 21,9 % d'orthoxylène et de 0,2 % de divers constituants aromatiques à 9 atomes de carbone.

L'unité est opérée de manière isotherme à 165 °C. La pression à l'aspiration des deux pompes de recyclage est régulée à 9 bar. Les compositions des flux sont obtenues par la moyenne des analyses de cinq séries d'échantillons (désorbant, extrait, charge, raffinât) prélevés toutes les six heures. Les débits correspondent à une mesure moyenne sur 24 heures. La pureté est calculée sur la composition de l'extrait, le rendement sur les compositions et débits d'extrait et de raffinat.

Le bilan matières montre un écart d'au plus 0,3 % pour les constituants majoritaires (C₈ aromatiques et paradiéthylbenzène) et d'au plus 2,6 % pour les constituants minoritaires (paraffines et naphtènes, toluène, C₉ aromatiques, métadiétylbenzène, autres C₁₀ aromatiques).

### Exemple 1 (comparatif sans rinçage de ligne)

On compte 5 lits en zone 1 entre l'injection de désorbant et le prélèvement d'extrait, 9 lits en zone 2 entre le prélèvement d'extrait et l'injection de charge, 7 lits en zone 3 entre l'injection de charge et le prélèvement de raffinat, et 3 lits en zone 4 entre le prélèvement de raffinat et l'injection de désorbant. Les débits suivants sont exprimés aux conditions de température et de pression : désorbant 18,3 m³/h, extrait 6,95 m³/h, charge 11,8 m³/h, raffinat 23,15 m³/h. Le temps de permutation est de 56 secondes, le cycle complet dure donc 22 minutes 24 secondes. La composition de l'extrait est : paraffines et naphtènes 0,009 %, toluène 1,121 %, éthylbenzène 0,055 %, paraxylène 35,324 %, métaxylène 0,095 %, orthoxylène 0,048 %, C₉ aromatiques 0,017 %, métadiéthylbenzène 1,021 %, paradiéthylbenzène 62,012 %, C₁₀ aromatiques 0,298 %.

La pureté est calculée sur les paraffines et naphtènes, l'éthylbenzène, le métaxylène, l'orthoxylène et les C8 aromatiques. Le toluène n'est pas compté puisqu'il est enlevé dans une autre colonne à distiller. La pureté s'établit à 99,37 %. La composition du raffinat est : paraffines et naphtènes 1,58 %, toluène 0,271 %, éthylbenzène 5,887 %, paraxylène 0,555 %, métaxylène 19,903 %, orthoxylène 11,65 %, C₉ aromatiques 0,097 %, métadiéthylbenzène 0,952 %, paradiéthylbenzène 58,82 %, C₁₀ aromatiques 0,30 %. Le rendement est donc de 95 %.

### Exemple 2 (rinçage de la ligne propre par du désorbant selon l'invention)

On reprend l'exemple 1 en raccordant en outre, le circuit de rinçage « propre » au refoulement de la pompe de désorbant. Le débit de désorbant de rinçage est de 0,96 m³/h.

La température et la pression sont gardées identiques à l'exemple 1. Comme précédemment on compte 5 lits en zone 1, 7 lits en zone 3 et 3 lits en zone 4. En revanche, entre le prélèvement d'extrait et l'injection de rinçage (zone 5) se trouve 1 lit et entre l'injection de rinçage et l'injection de charge (zone 2) se trouvent 8 lits.

Les débits de désorbant, de charge et de raffinat sont gardés strictement identiques à ceux de l'exemple 1. Les débits en zone 1, en zone 2, en zone 3 et en zone 4 sont gardés strictement identiques à ceux de l'exemple 1.

En revanche le débit d'extrait est maintenant de 7,91 m³/h et le débit dans le lit situé entre le prélèvement d'extrait et l'injection de rinçage (zone 5) a baissé de 0,96 m³/h par rapport au cas précédent ; il en résulte que le débit moyen de recyclage est maintenant 56,06 m³/h.

Dans ces conditions, la teneur en paraxylène dans l'extrait n'est plus que 31,072 %. Les teneurs en impuretés sont : paraffines et naphtènes 0,002 %, éthylbenzène 0,044 %, métaxylène 0,051 %, orthoxylène 0,026 %, C₉ aromatiques 0,008 %. La pureté est donc de 99,58 %, le rendement reste quasiment inchangé : 95,02 %.

### Exemple 3 (rinçage de la ligne « propre » par du désorbant)

On reprend les conditions de l'exemple 2 sauf que le débit de désorbant de rinçage est baissé de 0,96 m³/h à 0,48 m³/h.

Le débit d'extrait est alors de 7,43 m³/h, le débit de recyclage moyen est 56,08 m³/h.

La composition de l'extrait est : paraffines et naphtènes 0,002 %, éthylbenzène 0,045 %, paraxylène 33,044 %, métaxylène 0,0052 %, orthoxylène 0,026 %, C₉ aromatiques 0,008 %. La pureté est donc de 99,60 %, le rendement reste 95 %.

### Exemple 4 (rinçage de la ligne « propre » par du désorbant)

On reprend les conditions de l'exemple 2 sauf que le débit du désorbant de rinçage est baissé à 0,24 m³/h. Le débit d'extrait est alors de 7,19 m³/h, le débit de recyclage moyen est 56,09 m³/h. La pureté est 99,59 %, le rendement est 94,99 %.

### Exemple 5 (rinçage de la ligne « propre » par du désorbant)

On reprend l'exemple 3 en changeant uniquement la répartition des lits entre les zones 5 et 2. On compte 2 lits entre le prélèvement d'extrait et l'injection de rinçage. 7 lits se trouvent entre l'injection de rinçage et l'injection de charge,. Le débit de recyclage moyen change puisque l'on compte un lit de plus en zone 5 et un lit de moins en zone 2 : au lieu de 56,08 m³/h (exemple 3) il baisse à 56,06 m³/h. La pureté est 99,65 %, le rendement est 94,99 %.

### Exemples 6 à 8 (rinçage de la ligne « propre » par de l'extrait)

Le circuit de rinçage propre est raccordé en aval de la vanne de contrôle d'extrait. Le débit d'extrait de rinçage est de 0,48 m³/h.

Les débits dans les zones 1, 5, 2, 3, 4 ainsi que les débits de désorbant, de rinçage, de charge, d'extrait et de raffinat sont identiques à ceux de l'exemple 3. Les conditions de température et pression sont identiques à celles des exemples 1 à 5. On fait varier le nombre de lits en zones 5 et 2 selon le tableau I.

**Tableau I**

| **Exemple** | **Lits en** **zone 5** | **Lits en** **zone 2** | **Débit de recyclage moyen m**^{**3**}**/h** | **Pureté** **%** | **Rendement** **%** |
|---|---|---|---|---|---|
| 6 | 1 | 8 | 56,08 | 99,65 | 94,82 |
| 7 | 2 | 7 | 56,06 | 99,70 | 94,80 |
| 8 | 4 | 5 | 56,02 | 99,75 | 94,77 |

### Exemples 9 et 10 (rinçage de la ligne « propre » par de l'extrait appauvri en désorbant)

Le circuit de rinçage « propre » est raccordé au plateau soutireur de la colonne d'extrait (25e plateau localisé en zone de rectification). La colonne à distiller est réglée de telle manière que la concentration en paraxylène sur ce plateau soit environ de 65 %. Ce chiffre correspond à la concentration maximale en paraxylène dans l'adsorbeur. Ce maximum est localisé en zone 2.

Les débits dans les zones 1, 5, 2, 3, 4 ainsi que les débits de désorbant, de rinçage, d'extrait et de raffinat, ainsi que les conditions de température et de pression sont identiques à celles des exemples 6 à 8. On fait varier le nombre de lits en zones 5 et 2 selon le tableau II.

**Tableau II**

| **Exemple** | **Lits en** **zone 5** | **Lits en** **zone 2** | **Débit de recyclage moyen m**^{**3**}**/h** | **Pureté** **%** | **Rendement** **%** |
|---|---|---|---|---|---|
| 9 | 2 | 7 | 56,06 | 99,73 | 94,81 |
| 10 | 4 | 5 | 56,02 | 99,77 | 94,79 |

### Exemples 11 et 12 (rinçage en deux positions différentes par de l'extrait)

Le circuit de rinçage propre est raccordé en aval de la vanne de contrôle d'extrait. Le débit d'extrait de rinçage est de 0,48 m³/h.

Les vannes raccordées au circuit de rinçage propre sont actionnées deux fois au cours de la période de 56 secondes.

Pendant la première partie de la période, on compte 7 lits entre le prélèvement d'extrait et l'injection de rinçage et 2 lits entre l'injection de rinçage et l'injection de charge. Pendant la seconde partie de la période, on compte 2 lits entre le prélèvement d'extrait et l'injection de rinçage et 7 lits entre l'injection de rinçage et l'injection de charge.

Les débits dans les zones 1, 3, 4, les débits de désorbant, de rinçage, d'extrait et de raffinat, ainsi que les conditions de température et de pression sont identiques à ceux des exemples 6 à 8.

Les zones 2 et 5, pendant l'intégralité de la période, ne comptent plus que 2 lits chacune et leurs débits sont maintenus identiques à ceux des exemples 6 à 8. 5 lits se trouvent alternativement en zone 5 pendant la première partie de la période puis en zone 2 durant la seconde partie de la période. Pour tenir compte de cette particularité, lorsque la pompe de recyclage se trouve connectée à ces cinq lits, la consigne de débit de recyclage est la moyenne arithmétique des débits en zone 5 et en zone 2 (tableau III). Il apparaît donc une 6e zone, exactement comme si l'on injectait deux courants de rinçage propre, en permanence, en deux endroits différents de l'adsorbeur.

**Tableau III**

| **Exemple** | **1ère parties** | **2e parties** | **Débit de recyclage moyen m**^{**3**}**/h** | **Pureté** **%** | **Rendement** **%** |
|---|---|---|---|---|---|
| 11 | 16 | 40 | 56,03 | 99,72 | 94,75 |
| 12 | 28 | 28 | 56,02 | 99,79 | 94,70 |

Ces exemples 11 et 12 sont à comparer avec l'exemple 7.

### Exemple 13 (rinçage en deux positions différentes par de l'extrait appauvri)

Le circuit de rinçage propre est raccordé au plateau soutireur de la colonne d'extrait. On procède exactement comme pour l'exemple 12 mêmes conditions de débits, même agencement des zones 2 et 5, même partage en temps entre les deux parties de la période de 56 secondes.

La pureté est 99,82 %, le rendement 94,68 % (à comparer aux exemples 10 et 12).

### Exemple 14 à comparer à l'exemple 13

La température est portée à 175 °C et on adopte d'autres conditions : les débits massiques sont conservés par rapport à l'exemple 13, les débits volumiques augmentent tous de 0,9 % (en raison inversement proportionnelle aux masses volumiques de la charge à 165 °C et 175 °C). La période de permutation est réduite de 56 secondes à 55,6 secondes. La première et la seconde parties de la période sont 27,8 s chacune.

La pureté est 99,86 %, le rendement 94,76 %.

### Exemple 15 (rinçage séquentiel de la ligné propre et rinçage sortant continu de la ligne sale)

Par rapport à l'exemple n° 13, on augmente le débit de désorbant de 0,24 m³/h (donc de 18,3 m³/h à 18,54 m³/h). On connecte la ligne de rinçage sale à l'alimentation de la colonne à distiller de raffinat. Toutes les vannes tout ou rien de rinçage sale sont ouvertes et l'on règle les débits sur chacun des étages de manière à ce qu'un débit continu de 0,01 m³/h soit prélevé de chacun des distributeurs. L'ensemble des rinçages sales sortant de l'unité représente au total 0,24 m³/h. Ce flux est envoyé vers l'alimentation de la colonne à distiller de raffinat.

La pureté est 99,83 %, le rendement 94,27 %.

### Exemple 16 (rinçage séquentiel de la ligne propre et de la ligne sale)

On reprend l'exemple 13 avec en outre les deux vannes de rinçage qui sont opérées de manière séquentielle. On compte un lit d'écart entre l'injection de désorbant et le prélèvement de rinçage sale, quatre lits entre le prélèvement dé rinçage sale et le prélèvement d'extrait. Le débit de désorbant est 18,54 m³/h et le débit de rinçage sale de 0,24 m³/h. Une période par cycle, lorsque la pompe de recyclage est connectée au lit de la zone 7 (comprise entre l'injection de désorbant et le prélèvement de rinçage sale) la consigne de la pompe est augmentée de 0,24 m³/h par rapport à la consigne de la zone 1. La pureté est de 99,84 % et le rendement 94,65 %.

### Exemple 17 (rinçage séquentiel entrant des lignes propre et sale)

On reprend les conditions de l'exemple 10, en outre la ligne de rinçage sale est reliée au refoulement de la pompe de désorbant. Les vannes tout ou rien de rinçage sale sont opérées séquentiellement. Le rinçage sale est injecté au même endroit que le rinçage propre : quatre lits après le prélèvement d'extrait.

Le débit en zone 5 baisse de 0,24 m³/h, le débit d'extrait augmente de 0,24 m³/h (de 7,43 m³/h à 7,67 m³/h). Le débit de recyclage moyen baisse de 56,02 m³/h à 55,98 m³/h. La pureté est de 99,68 % et le rendement 95,49 %.

### Exemple 18 (rinçage en deux positions différentes de la ligne propre et rinçage séquentiel entrant de la ligne sale)

On reprend les conditions des exemples 12 et 17. Le rinçage sale est injecté 7 lits après le soutirage d'extrait et deux lits avant l'injection de charge. Un débit de 0,24 m³/h de désorbant est utilisé à cette fin. Le débit de recyclage moyen est de 55,95 m³/h. La pureté est de 99,78 %, le rendement 95,34 %.

### Exemple 19 (rinçage en deux positions différentes de la ligne « propre » par de l'extrait appauvri en désorbant et rinçage séquentiel sortant de la ligne « propre »)

On reprend les conditions de l'exemple 14 en y adjoignant en outre le rinçage séquentiel sortant décrit à l'exemple 16. La pureté est 99,89 % et le rendement 94,67 %.
La partie descriptive qui suit est commune aux exemples 20 à 24. Dans l'unité précédemment décrite, les distributeurs séparant les lits ont été remplacés par des distributeurs reliés à l'extérieur par quatre lignes distinctes. La première de ces lignés aboutit à une vanne de charge et une vanne de rinçage. La seconde de ces lignes aboutit à une vanne de raffinat et une vanne de rinçage. La troisième ligne aboutit à une vanne de désorbant et une vanne de rinçage. La quatrième ligne aboutit à une vanne d'extrait et une vanne de rinçage.

La composition de la charge et du désorbant ainsi que la nature du tamis moléculaire sont identiques à ceux des exemples 1 à 19.

### Exemple 20 (comparatif)

On reprend strictement les conditions opératoires de l'exemple n°1. la pureté obtenue est de 99,19 %, le rendement de 96,21 %.

### Exemple 21 (rinçage séquentiel en deux positions différentes de la ligne d'extrait uniquement)

On reprend strictement les conditions de l'exemple n° 14. la pureté obtenue est de 99,69 %, le rendement de 95,95 %.

### Exemple 22 (rinçage séquentiel en deux positions différentes de la ligne d'extrait et rinçage séquentiel entrant de la ligne de désorbant)

On reprend les conditions de l'exemple n° 21. En outre, on injecte un courant de rinçage constitué de désorbant de 0,24 m³/h dans la vanne de rinçage reliée à la ligne de désorbant, aboutissant 4 lits en aval du prélèvement d'extrait. La pureté obtenue est de 99,88 %, le rendement est 95,55 %.

### Exemple 23 (rinçage séquentiel en deux positions différentes de la ligne d'extrait, rinçage séquentiel entrant de la ligne de désorbant, rinçage séquentiel sortant de la ligne de charge)

On reprend les conditions de l'exemple 22, en outre on augmente de 0,24 m³/h le débit de désorbant et l'on prélève par la vanne de rinçage reliée à la ligne de charge un courant de 0,24 m³/h un'lit en aval de l'injection de désorbant.

Le courant de rinçage sortant est renvoyé vers la ligne d'appoint de charge. la pureté obtenue est de 99,90 %, le rendement de 94,97 %.

### Exemple 24 (rinçage séquentiel en deux positions différentes de la ligne d'extrait, rinçage séquentiel entrant de la ligne de désorbant, rinçage séquentiel sortant de la ligne de charge, rinçage séquentiel sortant de la ligne de raffinat)

On reprend les conditions de l'exemple 23, en outre on augmente de 0,24 m³/h le débit de désorbant et l'on prélève par la vanne de rinçage reliée à la ligne de raffinat un courant de 0,24 m³/h un lit en aval de l'injection de désorbant. Le courant de rinçage sortant est renvoyé vers la distillation de raffinat. La pureté obtenue est 99,91 %, le rendement 94,62 %.

Les exemples 2 à 19 et 21 à 24 montrent qu'il est essentiel de rincer la ou les lignes propres, pour obtenir des gains importants de pureté'et de séparer la ligne de raffinat et celle de charge pour obtenir un gain important de rendement. Les rinçages des lignes sales n'apportent que de faibles gains de pureté au prix d'une forte chute de rendement.

## Revendications

1. Dispositif de séparation en lit mobile simulé comprenant une pluralité de colonnes chromatographiques ou sections de colonne (2,4,6) interconnectées, un plateau (3) de distribution de fluides entre chaque section de colonne, au moins deux (10, 30) et au plus quatre lignes distinctes (10, 20, 30, 40) de circulation reliées au plateau de distribution (3), chaque ligne de circulation étant connectée à une ligne différente parmi deux lignes d'alimentation (100, 300) par lesquelles entrent la charge et le désorbaht et parmi deux lignes de soutirage (200, 400) par lesquelles sortent un fluide avec le produit recherché et un fluide avec le ou les produits non recherchés ; ou bien une première ligne de circulation (10) étant connectée à deux lignes (100, 200) dans lesquelles circulent respectivement le desorbant et le fluide avec le produit recherché, une deuxième ligne de circulation (30) étant connectée à une ligne d'alimentation en charge (300) et une troisième ligne de circulation étant connectée à une ligne de soutirage du fluide avec le produit non recherché (400) ; ou bien une première ligne de circulation étant connectée à deux lignes (300 et 400) dans lesquelles circulent respectivement la charge et le fluide avec le ou les produits non recherchés, une deuxième ligne de circulation étant connectée à une ligne d'alimentation en désorbant (100), et une troisième ligne étant connectée à une ligne de soutirage d'un fluide avec le produit recherché (200) ; ou bien une ligne de circulation (10) étant connectée à deux lignes dans lesquelles circulent respectivement lé désorbant (100) et le fluide avec le produit recherché (200) et l'autre ligne de circulation (30) étant connectée à deux lignes dans lesquelles circulent respectivement la charge (300) et le fluide avec le ou les produits non recherchés (400), le dispositif étant **caractérisé en ce que** la ligne (10) de circulation de fluide contenant le produit recherché est raccordée, par une ligne (23) comprenant une vanne (23a) à une ligne de rinçage (250) d'un fluide. secondaire entrant: soit un désorbant, soit un fluide avec le produit recherché, soit un fluide avec le produit recherché appauvri en désorbant,
ou d'un fluide sortant : mélange de désorbant et de fluide avec le produit recherché.

2. Dispositif selon la revendication 1 dans lequel au moins une autre (30) des lignes de circulation comprend une ligne de rinçage (350) d'un fluide entrant : désorbant dans le plateau distributeur ou d'un fluide sortant (350) du plateau distributeur : soit une charge, soit un fluide contenant le ou les produits non recherchés.

3. Dispositif selon la revendication 1 ou 2 dans lequel la ligne de rinçage (250 ou 350) du fluide entrant comprend au moins une enceinte pressurisée ou une pompe d'alimentation (101 ou 253) en le lit fluide connectée respectivement à un organe de régulation de débit (351, 352 ou 257, 256 fig. 1).

4. Dispositif selon la revendication 1 ou 2 dans lequel la ligne de rinçage (350 ou 250) du fluide sortant comprend un organe de régulation de débit (352, 351 ou 256, 257, fig. 1).

5. Procédé de séparation en lit mobile simulé dans un dispositif selon la revendication 1, **caractérisé en ce qu'**on effectue au moins un rinçage de la ligne (10) contenant le fluide comprenant le produit recherché par un fluide secondaire entrant dans chaque plateau de distribution ou par un fluide sortant de chacun desdits plateaux pendant au moins une partie d'une période de temps entre deux permutations successives de lignes d'alimentation en flux principaux et de lignes de soutirage de flux principaux, ou pendant la totalité desdites périodes, le fluide secondaire étant choisi dans le groupé formé par le désorbant, le fluide comprenant le produit recherché et le fluide comprenant le produit recherché débarrassé d'une partie au moins du désorbant.

6. Procédé selon la revendication 5 dans lequel on effectue, séquentiellement sur un plateau à la fois, le rinçage de la ligne (10) contenant le fluide comprenant le produit recherché par le fluide secondaire sensiblement de même composition, pendant au moins une partie de la période, tous les plateaux étant successivement balayés au cours d'un cycle.

7. Procédé selon la revendication 5 ou 6 dans lequel on effectue séquentiellement le rinçage de ladite ligne (10) par le fluide secondaire, en aval du soutirage d'extrait et en amont de l'alimentation en charge si le produit recherché est dans l'extrait et en aval du raffinat et en amont du désorbant si le produit recherché est dans le raffinat.

8. Procédé selon l'une des revendications 5 à 7 dans lequel on effectue un rinçage de ladite ligne (10) par le fluide contenant le produit recherché ou ledit fluide appauvri en désorbant, en amont de l'alimentation en charge pendant une partie de la période puis en aval du soutirage d'extrait pendant l'autre partie de la période, les deux positions ainsi définies étant distinctes, si le produit recherché est dans l'extrait.

9. Procédé selon la revendication 5 dans lequel on effectue en continu le rinçage de la ligne (10) par le fluide secondaire sur tous les plateaux à la fois pendant toutes les périodes du cycle.

10. Procédé selon l'une des revendications 5 à 9 dans lequel on effectue en outre séquentiellement au moins un rinçage de la ligne (30) contenant le fluide comprenant le ou les produits non recherchés par du désorbant entrant dans le plateau de distribution entre le soutirage d'extrait et l'alimentation en charge pendant une partie au moins de la période et de préférence pendant toute la période, lorsque le produit recherché est dans l'extrait.

11. Procédé selon l'une des revendications 5 à 9 dans lequel on effectue en outre séquentiellement au moins un rinçage de la ligne contenant le fluide (30) comprenant le ou les produits non recherchés par le fluide contenu dans la zone de désorption en produit recherché sortant d'un plateau de distribution compris entre l'alimentation en désorbant et le soutirage d'extrait et de préférence au voisinage de l'alimentation en désorbant, pendant une partie au moins de la période.

12. Procédé selon l'une des revendications 5 à 9 dans lequel on effectue en outre en continu le rinçage des lignes comprenant le ou les produits non recherchés de tous les plateaux de distribution par le fluide contenu dans l'adsorbeur.

13. Procédé selon la revendication 5 dans lequel, lorsque le plateau de distribution comprend trois ou quatre lignes de circulation, on effectue en outre le rinçage de la ligne véhiculant le désorbant (100) par du désorbant injecté par la ligne (150).

14. Procédé selon la revendication 5 dans lequel on effectue un rinçage avec un rapport de débit de fluide de rinçage sur débit de charge compris entre 0,005 et 0,4, avantageusement entre 0,02 et 0,15 et de préférence entre 0,04 et 0,08.

## Patentansprüche

1. Trennvorrichtung im beweglichen simulierten Bett, eine Vielzahl chromatographische Kolonnen oder miteinander verbundene Kolonnenabschnitte (2, 4, 6), des weiteren einen Verteilerboden (3) für Fluide zwischen jedem Kolonnenabschnitt, wenigstens zwei (10, 30) und höchstens vier unterschiedliche Leitungen (10, 20, 30, 40) für die Zirkulation, die mit dem Verteilerboden (3) verbunden sind, umfassend, wobei jede Zirkulationsleitung mit einer unterschiedlichen aus zwei Speiseleitungen (100, 300) verbunden ist, über welche die Charge und das Desorbens eintreten und einer unterschiedlichen aus zwei Abzugsleitungen (200, 400), über welche ein Fluid mit dem nachgesuchten Produkt und ein Fluid mit dem oder den nicht nachgesuchten Produkt(en) austreten; oder auch eine erste Zirkulationsleitung (10), die mit den beiden Leitungen (100, 200) verbunden ist, in welchen jeweils das Desorbens und das Fluid mit dem nachgesuchten Produkt zirkulieren, eine zweite Zirkulationsleitung (30) mit einer ersten Chargenspeiseleitung (300) verbunden ist und eine dritte Zirkulationsleitung mit einer Abzugsleitung für das Fluid mit dem nicht nachgesuchten Produkt (400) oder auch eine erste Zirkulationsleitung mit zwei Leitungen (300 und 400) verbunden ist, in welchen jeweils die Charge und das Fluid mit dem oder den nicht nachgesuchten Produkt(en) zirkulieren, wobei eine zweite Zirkulationsleitung mit einer Desorbensspeiseleitung (100) verbunden ist und eine dritte Leitung mit einer Abzugsleitung für ein Fluid mit dem nachgesuchten Produkt (200) verbunden ist; oder auch eine Zirkulationsleitung (10) mit zwei Leitungen verbunden ist, in welchen jeweils das Desorbens (100) und das Fluid mit dem nachgesuchten Produkt (200) zirkulieren und die andere Zirkulationsleitung (30) mit zwei Leitungen verbunden ist, in welchen jeweils die Charge (300) und das Fluid mit dem oder den nicht nachgesuchten Produkten (400) zirkulieren, wobei die Vorrichtung sich dadurch auszeichnet, dass die Fluidzirkulationsleitung (10), die das nachgesuchte Produkt enthält, über eine Leitung (23) mit einem Ventil (23a) an eine Spülleitung (250) eines eintretenden Sekundärfluids angeschlossen ist: entweder ein Desorbens oder ein Fluid mit dem nachgesuchten Produkt oder ein Fluid mit dem nachgesuchten an Desorbens verarmten Produkt oder ein austretendes Fluid: Gemisch von Desorbens und Fluid mit dem nachgesuchten Produkt.

2. Vorrichtung nach Anspruch 1, bei der wenigstens eine andere (30) der Zirkulationsleitungen eine Spülleitung (350) für ein eintretendes Fluid: Desorbens im Verteilerboden oder eines austretenden Fluids (350) aus dem Verteilerboden: sei es eine Charge, sei es ein das oder die nicht nachgesuchte(n) Produkt(e) enthaltendes Fluid, umfasst.

3. Vorrichtung nach Anspruch 1 oder 2, bei der die Kühlleitung (250 oder 350) des eintretenden Fluids wenigstens ein unter Druck stehendes Gefäß oder eine Speisepumpe (101 oder 253) in dem Fluidbett umfasst, die jeweils mit einem Durchsatzsteuerorgan (351, 352 oder 257, 256, Fig. 1) verbunden sind.

4. Vorrichtung nach Anspruch 1 oder 2, bei der die Spülleitung (350 oder 250) des austretenden Fluids ein Durchsatzsteuerorgan (352, 351 oder 256, 257, Fig. 1) umfasst.

5. Verfahren zum Trennen im simulierten beweglichen Bett innerhalb einer Vorrichtung gemäß Anspruch 1, **dadurch gekennzeichnet, dass** wenigstens eine Spülung der Leitung (10), welche das das nachgesuchte Produkt umfassende Fluid enthält, durch ein zweites in jeden Verteilerboden eintretendes Fluid oder durch ein austretendes Fluid aus jedem dieser Böden über wenigstens einen Teil einer zeitlichen Periode zwischen zwei aufeinander folgenden Umschaltvorgängen der Speiseleitungen mit dem Hauptfluss und Abzugsleitungen für den Hauptfluss oder während der Gesamtheit dieser Perioden durchgeführt wird, wobei das Sekundärfluid aus der Gruppe gewählt ist, die gebildet wird durch das Desorbens, das das nachgesuchte Produkt enthaltende Fuid und das das nachgesuchte Produkt frei von wenigstens einem Desorbens umfassende Fluid.

6. Verfahren nach Anspruch 5, bei dem man sequentiell über einen Boden gleichzeitig das Spülen der Leitung (10), welche das Fluid einschließlich des nachgesuchten Produkts enthält, durch das Sekundärfluid im Wesentlichen von der gleichen Zusammensetzung während wenigstens eines Teils der Periode, durchführt, wobei sämtliche Böden nacheinander während eines Zyklus bespült werden.

7. Verfahren nach Anspruch 5 oder 6, bei dem man sequentiell das Spülen jeder Leitung (10) durch das Senkundärfluid nach dem Abziehen des Extrakts und vor der Speisung mit Charge vornimmt, wenn das nachgesuchte Produkt im Extrakt und hinter dem Raffinat und vor dem Desorbens sich befindet, wenn das nachgesuchte Produkt im Raffinat ist.

8. Verfahren nach einem der Ansprüche 5 bis 7, bei dem man ein Spülen dieser Leitung (10) durch das das nachgesuchte Produkt enthaltende Fluid oder dieses an Desorbens verarmte Fluid vor der Speisung mit Charge während eines Teils der Periode, dann nach dem Abzug des Extrakts während des anderen Teils der Periode, vornimmt, wobei die beiden Positionen so unterschiedlich definiert werden, wenn das nachgesuchte Produkt sich im Extrakt befindet.

9. Verfahren nach Anspruch 5, bei dem man kontinuierlich das Spülen der Leitung (10) durch das Sekundärfluid auf sämtlichen Böden gleichzeitig während sämtlicher Perioden des Zyklus vornimmt.

10. Verfahren nach einem der Ansprüche 5 bis 9, bei dem man im übrigen sequentiell wenigstens eine Spülung der Leitung (30) vornimmt, welche das Fluid, das das oder die nicht nachgesuchten Produkt(e), umfasst, enthält ,und zwar durch Desorbens, das in den Verteilerboden zwischen dem Abzug des Extrakts und der Speisung der Charge während wenigstens eines Teils der Periode und bevorzugt während der gesamten Periode vornimmt, wenn das nachgesuchte Produkt sich im Extrakt befindet.

11. Verfahren nach einem der Ansprüche 5 bis 9, bei dem man im übrigen sequentiell wenigstens ein Spülen der das Fluid (30), das das oder die nicht nachgesuchte(n) Produkt(e) umfasst, enthält, durch Fluid vornimmt, das in der Zone zur Desorption des nachgesuchten Produkts, das aus einem Verteilerboden austritt, enthalten ist, welcher zwischen der Speisung mit Desorbens und dem Abzug des Extrakts vorgesehen ist, und bevorzugt benachbart der Speisung mit Desorbens während wenigstens eines Teils der Periode.

12. Verfahren nach einem der Ansprüche 5 bis 9, bei dem man im übrigen kontinuierlich das Spülen der Leitungen, welche das oder die nicht nachgesuchte(n) Produkt(e) sämtlicher Verteilerböden durch das im Adsorber enthaltene Produkt vornimmt.

13. Verfahren nach Anspruch 5, bei dem man, wenn der Verteilerboden drei oder vier Zirkulationsleitungen umfasst, im übrigen das Spülen der das Desorbens (100) transportierenden Leitung durch Desorbens vornimmt, das über die Leitung (100) injiziert wurde.

14. Verfahren nach Anspruch 5, bei dem man ein Spülen mit einem Verhältnis von Spülfluid Durchsatz zu Durchsatz Charge zwischen 0,005 und 0,4, vorzugsweise zwischen 0,02 und 0,15, bevorzugt zwischen 0,04 und 0,08 vornimmt.

## Claims

1. A simulated moving bed separation apparatus comprising a plurality of interconnected chromatographic columns or column sections (2, 4, 6), a fluid distributor plate (3) between each column section, at least two (10, 30) and at most four (10, 20, 30, 40) distinct circulation lines connected to the distributor plate (3), each circulation line being connected to a different line selected from two supply lines (100, 300) by which the feed and the desorbent enter and from two extraction lines (200, 400) by which a fluid containing the desired product and a fluid containing the unwanted product or products leave; in which either a first circulation line (10) is connected to two lines (100, 200) in which the desorbent and the fluid containing the desired product circulate respectively, a second circulation line (30) is connected to a feed supply line (300) and a third circulation line is connected to an extraction line for fluid containing the unwanted product (400); or in which a first circulation line is connected to two lines (300 and 400) in which the feed and the fluid containing the unwanted product or products respectively circulate, a second circulation line is connected to a desorbent supply line (100), and a third line is connected to a line for extracting fluid containing the desired product (200); or in which a circulation line (10) is connected to two lines in which the desorbent (100) and the fluid containing the desired product (200) respectively circulate, and the other circulation line (30) is connected to two lines in which the feed (300) and the fluid containing the unwanted product or products (400) circulate respectively, the apparatus being **characterized in that** the line (10) for circulating the fluid containing the desired product is connected, by a line (23) comprising a valve 23a to a flushing line (250) for a secondary incoming fluid : either a desorbent, or a fluid containing the desired product or a fluid containing the desired product depleted in desorbent, or for an outgoing fluid: mixture of desorbent and fluid containing the desired product.

2. An apparatus according to claim 1, in which at least one other (30) of the circulation lines comprises a flushing line (350) for a fluid: desorbent entering the distributor plate or for a fluid (350) leaving the distributor plate: either a feed, or a fluid containing the unwanted product or products).

3. An apparatus according to claim 1 or claim 2, in which the fluid in flush line (250 or 350) comprises at least one pressurised chamber or a pump (101 or 253) for supplying said fluid respectively connected to a flow rate regulation means (351, 352 or 256, 257, Fig. 1).

4. An apparatus according to claim 1 or claim 2, in which the fluid out flush line (350 or 250) comprises a flow rate regulation means (352, 351 or 256, 257, Fig.1).

5. A simulated moving bed separation process carried out in an apparatus according to claim 1, the process being **characterized in that** the line (10) containing the fluid containing the desired product is flushed at least once with a secondary incoming fluid entering each distributor plate or by a fluid leaving each of said plates during at least a portion of a period of time between two successive permutations of the principal supply lines and the principal extraction lines, or during the totality of said periods, the secondary fluid being selected from the group formed by the desorbent, the fluid containing the desired product and the fluid containing the desired product freed of at least a portion of the desorbent.

6. A process according to claim 5, in which the line (10) containing the fluid containing the desired product is flushed by the secondary fluid which is of substantially the same composition during at least a portion of the period, said flushing being sequential, one plate at a time, all of the plates being flushed successively during the course of one cycle.

7. A process according to claim 5 or claim 6, in which line is sequentially flushed by the secondary fluid, downstream of the extract extraction and upstream of the feed supply if the desired product is in the extract and downstream of the raffinate and upstream of the desorbent if the desired product is in the raffinate.

8. A process according to any one of claims 5 to 7, in which line (10) containing the fluid containing the desired product is flushed by the fluid containing the desired product or said fluid depleted in desorbent, upstream of the feed supply for a portion of the period then downstream of the extract extraction during a further portion of the period, the two positions thus defined being distinct, if the desired product is in the extract.

9. A process according to claim 5, in which said line is continuously flushed by the secondary fluid over all of the plates at once during all of the periods of the cycle.

10. A process according to any one of claims 5 to 9, in which line (30) containing the fluid containing the unwanted product or products is sequentially flushed at least once with desorbent entering the distributor plate between the extract extraction and the feed supply during at least a portion of the period, preferably during the entire period, when the desired product is in the extract.

11. A process according to any one of claims 5 to 9, in which the line (30) containing the fluid containing the unwanted product or products is sequentially flushed at least once with the fluid contained in the desorption zone for the desired product which leaves a distributor plate between the desorbent supply and the extract extraction, preferably near the desorbent supply, during at least a portion of the period.

12. A process according to any one of claims 5 to 9, in which the lines containing the unwanted product or products from all of the distributor plates are continuously flushed using the fluid contained in the adsorber.

13. A process according to claim 5 in which, when the distributor plate comprises three or four circulation lines, the line transporting the desorbent (100) is flushed by desorbent injected by line (150).

14. A process according to claim 5, in which flushing is carried out with a ratio of the flushing fluid flow rate to the feed flow rate which is in the range 0.005 to 0.4, advantageously in the range 0.02 to 0.15, and preferably in the range 0.04 to 0.08.
